Europäisches Patentamt

European Patent Office

Office européen des brevets

(19)

(11) Numéro de publication: **0 258 137**
**B1**

(12) **FASCICULE DE BREVET EUROPEEN**

(45) Date de publication du fascicule du brevet:
21.03.90

(21) Numéro de dépôt: **87401891.4**

(22) Date de dépôt: **17.08.87**

(51) Int. Cl.⁴: **B01J 23/96**, B01J 38/20,
C10G 49/06

(54) **Procédé de régénération d'un catalyseur d'hydroconversion d'hydrocarbures.**

(30) Priorité: **25.08.86 FR 8612109**

(43) Date de publication de la demande:
**02.03.88 Bulletin 88/9**

(45) Mention de la délivrance du brevet:
**21.03.90 Bulletin 90/12**

(84) Etats contractants désignés:
**BE DE GB GR IT NL**

(56) Documents cités:
**EP-A- 0 172 353**
**FR-A- 1 096 790**
**FR-A- 2 229 456**
**GB-A- 1 327 783**
**US-A- 4 406 775**

(73) Titulaire: **INSTITUT FRANCAIS DU PETROLE, 4, Avenue de Bois-Préau, F-92502 Rueil-Malmaison(FR)**

(72) Inventeur: **Ham, Pierre, Domaine Saint François d'Assise Les Choucas No. 2, F-78170 La Celle Saint Cloud(FR)**
Inventeur: **Dessapt, Jean-Paul, 25, rue des Ibis, F-78650 Beynes(FR)**
Inventeur: **Bischoff, Didier, 20, rue Danton, F-92500 Rueil-Malmaison(FR)**
Inventeur: **Bonneville, Jean de, 290, Avenue Napoléon Bonaparte, F-92500 Rueil-Malmaison(FR)**

ACTORUM AG

## Description

La présente invention concerne un procédé de régénération d'un catalyseur d'hydroconversion renfermant un support, au moins un métal de la famille du platine ainsi qu'un certain pourcentage d'un halogène, par exemple de 0,1 à 10% en poids, ledit catalyseur ayant été utilisé pour la conversion d'hydrocarbures et notamment pour l'hydroreforming d'hydrocarbures ou la production d'hydrocarbures aromatiques, par exemple la production de benzène, de toluène et de xylènes (ortho, méta ou para), soit à partir d'essences insaturées ou non, (par exemple des essences de pyrolyse de cracking, en particulier de steam cracking ou de reforming catalytique), soit encore à partir d'hydrocarbures naphténiques capables par deshydrogénation de se transformer en hydrocarbures aromatiques.

L'invention concerne également la régénération d'un catalyseur pour la deshydrogénation d'hydrocarbures saturés, naphténiques ou paraffiniques, pour l'isomérisation de composés alkylaromatiques, ou encore par exemple pour l'alkylation d'hydrocarbures ou pour l'hydrocracking d'hydrocarbures.

Les conditions générales des réactions d'hydroreforming ou hydroreformage catalytique sont les suivantes: la température moyenne du réacteur ou zone de réaction est comprise entre, environ 480 et 600°C, la pression est comprise entre environ $49.10^4$ et $196.10^4$ Pa (5 et 20 kg/cm²), la vitesse horaire est comprise entre 0,5 et 10 volumes de naphta liquide par volume de catalyseur et le taux de recyclage est compris entre 1 et 10 moles d'hydrogène par mole de charge. La charge peut être un naphta distillant entre environ 60°C et environ 220°C, en particulier naphta de distillation directe; le catalyseur renferme par exemple au moins un métal noble de la famille du platine, c'est-à-dire un métal noble tel que le platine, palladium, iridium, ruthénium, osmium, déposé sur un support d'alumine ou d'un composé équivalent. La teneur totale en métaux nobles est de 0,1% à 2% en poids par rapport au catalyseur et la teneur en halogène, de préférence chlore ou fluor, de 0,1% à 10% poids. Comme autre type de support, on peut citer par exemple les silices alumines amorphes ou cristallisées, les silices magnésiés, les silices thorines, les alumines magnésiés etc...

Le catalyseur peut renfermer au moins un autre promoteur métallique choisi dans les groupes les plus divers de la classification périodique des éléments.

Les conditions générales des réactions de production d'hydrocarbures aromatiques à partir d'essences insaturées ou non, (procédé de type «Aromizing» ou similaire) sont par exemple les suivantes:

Si la charge est insaturée, c'est-à-dire si elle contient des dioléfines et des monooléfines, elle devra d'abord en être débarrassée par hydrogénation sélective ou totale. Ensuite, la charge éventuellement débarrassée par hydrogénation de sensiblement toutes ses dioléfines et monooléfines, lorsqu'elle en contient, est soumise dans chaque zone de réaction, à un traitement à l'hydrogène, en présence d'un catalyseur renfermant un support, 0,1 à 10% en poids d'un halogène et au moins un métal noble du groupe VIII (famille du platine) et éventuellement également au moins un autre promoteur métallique convenablement choisi dans la classification périodique des éléments; la teneur en métal de la famille du platine est comprise généralement entre 0,005 et 5% en poids. Le support est choisi parmi les alumines et les alumines chlorées et/ou fluorées, ou autres composés similaires parmi lesquels on peut mentionner les silice-alumines, les silices magnésies, les silice-thorines, les alumines magnésies, etc... La réaction est effectuée à une température comprise entre environ 500 et 600°C, sous une pression comprise entre $9,8.10^4$ et $588.10^4$ Pa (1 et 60 kg/cm²), le débit volumétrique horaire de charge liquide étant de l'ordre de 0,1 à 10 fois le volume du catalyseur et le rapport molaire hydrogène: hydrocarbures étant de l'ordre de 0,5 à 20.

Les conditions générales des réactions de deshydrogénation d'hydrocarbures saturés naphténiques et paraffiniques (ayant 3 à 40 atomes de carbone par molécule), sont les suivantes: ces réactions sont effectuées en présence de catalyseurs de même type que ceux de reforming, à une température généralement comprise entre 300 et 600°C, sous un débit horaire compris entre 0,1 et 30 volumes de charge liquide par volume de catalyseur. Le rapport molaire hydrogène/hydrocarbures à l'entrée du réacteur est habituellement compris entre 0,1 et 30.

Les conditions opératoires des réactions d'isomérisation de composés alkyl-aromatiques et plus particulièrement l'isomérisation des hydrocarbures alkyl-aromatiques en C8 (c'est-à-dire les xylènes, l'éthyl benzène et leurs mélanges de composition ne correspondant pas à l'équilibre thermodynamique et spécialement des mélanges dans lesquels la teneur en para-xylène est inférieure à celle existant au dit équilibre) sont les suivantes:

Le catalyseur possède outre un support classique, au moins un élément métallique ayant un caractère hydrogénant-deshydrogénant afin que le catalyseur soit capable de transformer l'éthyl benzène et aussi pour diminuer l'encrassement du catalyseur dû à la formation et au dépôt sur le solide de produits lourds provenant d'une polymérisation parasite toujours possible.

Le ou les éléments métalliques à caractère hydrogénant-deshydrogénant seront choisis en particulier parmi les métaux nobles du groupe VIII, c'est-à-dire les métaux nobles de la famille du platine avec addition éventuelle de métaux ou dérivés des métaux du groupe VI-A (chrome, molybdène, tungstène) de la classification périodique des éléments.

Les quantités de l'élément métallique ou de chacun des éléments métalliques, s'il y en a plusieurs, sont comprises généralement entre 0,005 et 1% en poids de catalyseur.

La réaction sera conduite à une température comprise entre environ 350°C et 500°C, la pression sera comprise entre environ $5.10^5$ et $30.10^5$ Pa (5 et 30 bars), la vitesse spatiale entre environ 0,5 et 10 volumes de charge liquide par volume de catalyseur et par heure et le rapport hydrogène/hydrocarbures sera compris entre environ 2 et 10 (en moles).

Le document US-A 4 406 775 décrit un procédé de régénération et de réactivation de catalyseurs désactivés contenant des métaux nobles (platine par exemple) dans lequel sont utilisés deux circuits distincts de gaz de régénération, ledit gaz circulant d'un circuit à l'autre.

Le catalyseur que l'on désire régénérer, qui renferme donc en général 0,005 à 5% d'au moins un métal noble de la famille du platine et 0,1 à 10% d'un halogène, par exemple le chlore, provient soit d'un réservoir dans lequel il a été accumulé avant que l'on procède à une régénération, soit directement du réacteur où s'est faite la réaction; ce catalyseur, par exemple en grains, peut se présenter, par exemple, sous la forme de billes sphériques de diamètre compris généralement entre 1 et 3 mm, de préférence entre 1,5 et 2 mm, sans que ces valeurs soient limitatives. La densité en vrac du catalyseur est généralement comprise entre 0,4 et 1, de préférence entre 0,5 et 0,9 et plus particulièrement entre 0,55 et 0,8 sans que ces valeurs soient limitatives.

La régénération du catalyseur, est effectuée dans une enceinte où le catalyseur y est traité sous la forme d'un lit fixe ou mobile. Dans cette enceinte, le catalyseur est successivement, et par exemple:

(a) soumis à une combustion à l'aide d'un gaz renfermant de l'oxygène moléculaire;

(b) soumis à une chloration ou à une oxychloration simultanément au moyen d'un gaz renfermant de l'oxygène moléculaire et au moyen d'un halogène (par exemple le chlore) ou d'un composé halogéné, par exemple un hydracide halogéné ou un halogénure d'alkyle, ou d'un mélange d'halogène et d'un composé halogéné.

(c) soumis à un traitement final à l'aide d'un gaz renfermant une concentration forte d'oxygène moléculaire.

On peut procéder, à la régénération, en opérant dans une zone de régénération dans laquelle le catalyseur à régénérer est disposé en lit fixe. Le catalyseur est alors régénéré en lit fixe en trois étapes successives (a), (b), et (c) effectués successivement sur le lit fixe de catalyseur.

Les conditions détaillées du procédé de régénération sont de préférence les suivantes:

(a) la première étape correspond à la combustion des dépôts de coke. Cette opération est réalisée par l'injection d'air dans un mélange inerte (composé, par exemple, d'azote et de gaz carbonique), ce mélange inerte servant de diluant thermique. La teneur en oxygène dans le gaz de régénération injecté est de préférence comprise entre 0,01 et 1% en volume. L'oxygène de l'air injecté est consommé par la combustion des dépôts de coke et la fin de la combustion se détecte aisément par l'augmentation de la teneur en oxygène dans le gaz sortant du régénérateur et également par la disparition du front de flamme (plan horizontal où se produit la combustion) qui se propage de haut en bas du lit catalytique. La combustion est réalisée à une température moyenne comprise de préférence entre 350 et 550°C et sous une pression comprise, par exemple, entre 9,8.10⁴ et 147.10⁴ Pa (1 et 15 kg/cm²).

On règle la température de combustion en contrôlant la concentration de l'oxygène, la température des gaz à l'entrée du régénérateur, ainsi que la vitesse des gaz de manière à maintenir une température, au niveau du front de flamme, qui soit inférieure à celle où il y aurait début de frittage, en général inférieure à 700°C, de préférence aux environs de 450°C. On maintient ce passage de gaz le temps suffisant pour éliminer le coke se trouvant sur le catalyseur. On peut de cette manière éliminer pratiquement tout le coke.

En général, on peut par exemple réduire, la quantité de coke restant sur le catalyseur aux environs de 0,5% en poids en 4 heures de régénération et en dessous de 0,1 % en 6 heures.

(b) La deuxième étape correspond à la chloration ou à l'oxyhalogénation du catalyseur ; pour réaliser une oxyhalogénation, on augmente la teneur en oxygène du gaz de régénération admis dans le régénérateur jusqu'à une valeur comprise entre 1 et 8% en volume en introduisant simultanément un composé à base d'halogène (chlore ou fluor), c'est-à-dire soit un halogène (chlore ou fluor notamment), soit un hydracide halogéné (par exemple HCl, ou HF ou HBr), soit encore, un halogénure d'alkyle renfermant 1 à 6 atomes de carbone par molécule, par exemple le chloroforme, le chlorure de butyle tertiaire, le fluorure de cyclohexyle, le fluorure d'isopropyle, le fluorure de butyle tertiaire, le fluorure de cyclohexyle, le fluorure d'isopropyle, le fluorure de butyle tertiaire, le dichlorodifluorométhane, et de préférence le tétrachlorure de carbone ; la proportion d'halogénure d'alkyle est telle que cet halogénure d'alkyle puisse être capable de former 0,5 à 1,2 % en poids d'un dérivé halogéné d'alumine par rapport au catalyseur soumis à la régénération. On peut également utiliser des mélanges de composés halogénés, par exemple un mélange de chlore et d'acide chlorhydrique, ce dernier mélange renfermant environ 5 à 60% d'acide chlorhydrique et 95 à 40% de tétrachlorure de carbone. On peut également utiliser d'autres composés halogénés par exemple des composés tels que le chlorure de thionyle ou le chlorure de nitrosyle, le chlorure ou le fluorure d'ammonium, des acides organiques halogénés tels que l'acide monochloracétique et l'acide trichloracétique, ou tout autre composé équivalent.

La chloration ou l'oxyhalogénation est effectuée à une température moyenne comprise entre 350 et 550°C et sous une pression comprise entre, environ $9,8.10^4$ et $147.10^4$ Pa (1 et 15 kg/cm²). La durée de ce traitement peut être comprise par exemple, entre 20 minutes et 3 heures. En général, elle est d'environ 1 heure.

(c) La troisième étape de régénération correspond à l'oxydation du catalyseur: pour la réaliser, on augmente encore la teneur en oxygène de gaz de régénération admis dans le régénérateur jusqu'à une valeur comprise entre 3 et 20% en volume et on maintient ensuite le régénérateur à une température moyenne comprise entre 350 et 550°C et une pression moyenne comprise entre $9,8.10^4$ et $147.10^4$ Pa (1 et 15 kg/cm²). La durée de cette opération est comprise, par exemple, entre 30 minutes et 6 heures et de préférence entre 40 minutes et 2 heures. En général elle est d'environ 2 heures.

Après la troisième étape, le régénérateur est généralement purgé à l'azote, puis mis par exemple sous hydrogène en équilibre de pression avec la zone de réaction dans lequel le catalyseur va être injecté. Le catalyseur est ensuite stocké ou immédiatement transvasé du régénérateur vers un réacteur à travers tout un système de vannes adéquat. Mais avant d'être introduit dans un réacteur, ou en tête de réacteur, le catalyseur, en général, est d'abord traité, par un courant d'hydrogène, à une température, par exemple, comprise entre 300 et 550°C, et à une pression comprise, par exemple, entre $29,4.10^4$ et $245.10^4$ Pa (3 et 25 kg/cm²), de préférence entre $49.10^4$ et $196.10^4$ Pa (5 et 20 kg/cm²). La sulfuration du catalyseur dans les cas où il peut être nécessaire d'en faire une, pourra être effectuée dans cet espace ou en tête du réacteur lui-même ou dans les diverses conduites de transfert du catalyseur en tête de ce réacteur.

Le principe de l'invention consiste à répartir le catalyseur à régénérer dans deux zones de régénération. Le gaz effluent de la première zone est après refroidissement et ajustement de la quantité d'oxygène utilisé pour la seconde zone de régénération.

Dans le procédé de la présente invention on remplace la zone de régénération par deux zones de régénération. Le catalyseur chargé dans le régénérateur provient d'un ballon tampon où a été accumulé le catalyseur usé soutiré de la zone réactionnelle.

Ces deux zones de régénération peuvent être disposées l'une à côté de l'autre, dans ce cas les deux zones peuvent être remplies simultanément de catalyseur, ou l'une au-dessus de l'autre, dans ce cas la zone inférieure est généralement remplie la première.

Dans ces deux zones de régénération, le catalyseur est disposé en lit fixe.

L'étape importante qui dimensionne la taille des équipements est l'étape du brûlage du coke contenu sur le catalyseur. Pour un pourcentage d'oxygène donné le temps de brûlage est proportionnel à la quantité de gaz mis en contact avec le catalyseur.

Lorsque l'on n'utilisait dans l'art antérieur qu'une seule zone de régénération il fallait un débit horaire de V Nm³/h de gaz pour provoquer dans un temps donné la combustion du coke du catalyseur. Dans la présente invention un débit horaire de V/2 Nm³/h de gaz suffit pour assurer la combustion de la même quantité de coke de catalyseur dans le même temps.

D'une façon générale, la température des gaz alimentant soit une zone de régénération (cas de l'art antérieur) soit deux zones de régénération (dans la présente invention) est de l'ordre de 400°C lors de la combustion du coke à titre d'exemple. La température correspondante des gaz effluents de la première zone est de l'ordre de 470°C environ à titre d'exemple.

Ce gaz effluent de la première zone est à une température trop élevée si l'on souhaite opérer dans la seconde zone d'une façon identique à la première.

Il convient donc, conformément à la présente invention de les refroidir. Dans ce but ils sont envoyés dans un échangeur dans lequel circule à contre courant le gaz alimentant la première zone, ce dernier gaz étant introduit dans l'échangeur à une température plus froide que la température d'admission dans la première zone de régénération.

Ainsi les calories prélevées sur les gaz effluent de la première zone de régénération servent à préchauffer le gaz de combustion de la première zone de régénération. A titre d'exemple, les gaz appauvris en oxygène soutirés à 470°C de la première zone de régénération, sortent de l'échangeur à une température de l'ordre de 400°C, c'est-à-dire à une température adéquate pour que ces gaz soient introduits (après un appoint d'oxygène) dans la seconde zone de régénération, tandis que le gaz de combustion destiné à être introduit vers 400°C dans la première zone de régénération, est introduit dans ledit échangeur vers 330°C par exemple et en sort à 400°C par exemple.

Ainsi, l'invention concerne un procédé de régénération d'un catalyseur d'hydroconversion d'hydrocarbures renfermant (a) un support, (b) 0,005 à 5% d'au moins un métal noble choisi dans le groupe formé par le platine, le palladium, l'iridium, le ruthénium et l'osmium et 0,1 à 10% d'un halogène, procédé comprenant une première étape de combustion du coke déposé sur le catalyseur à l'aide d'un gaz renfermant de l'oxygène moléculaire, une deuxième étape d'oxyhalogénation dudit catalyseur simultanément au moyen d'un gaz renfermant de l'oxygène moléculaire et au moyen d'un halogène ou d'un composé halogéné et une troisième étape d'oxydation dudit catalyseur à l'aide d'un gaz renfermant de l'oxygène moléculaire, le dit procédé étant caractérisé en ce qu'il a lieu dans au moins deux zones de régénération dans chacune desquelles ledit catalyseur est disposé en lit fixe et en ce que:

(a) préalablement à l'étape de combustion, le dit gaz renfermant de l'oxygène moléculaire pénètre à une température T', inférieure à T, dans un échangeur à la sortie duquel le dit gaz est à une température sensiblement égale à T.

(b) le dit gaz, à la température T, est introduit dans une première zone de régénération en vue de brûler le coke du catalyseur disposé dans cette première zone de régénération),

(c) un gaz, appauvri en oxygène, est soutiré de la première zone de régénération, à une température T1 supérieure à T, puis est envoyé à travers le dit échangeur défini au paragraphe (a), à la sortie duquel le dit gaz appauvri en oxygène est à une température sensiblement égale à T±Δ (où Δ est compris entre 0 et 15°C).

(d) le dit gaz à une température sensiblement égale à T±Δ, après avoir été soumis à un appoint en oxygène, soit avant soit après la traversée du dit échangeur, est envoyé vers au moins une autre zone de régénération en vue de brûler le coke du catalyseur de cette autre zone de régénération.

Les advantages de l'invention dans laquelle on met en oeuvre deux zones de régénération sont de pouvoir, pour une même quantité de catalyseur à traiter, utiliser un débit horaire de gaz deux fois plus petit qu'à l'habitude pour brûler le coke du catalyseur. De ce fait la taille des équipements véhiculant et traitant le gaz est divisée par deux. Il s'agit d'échangeurs, de four, de compresseur, de sécheur, etc.

L'avantage immédiat de cette réduction de la taille des équipements concerne la quantité de gaz inerte (gaz inerte ou azote) qu'il est nécessaire d'utiliser pour la purge finale. Cette consommation est en fait divisée par deux.

A titre indicatif, pour régénérer 2,5 tonnes de catalyseur, il fallait un débit de gaz de 14 t/h. Avec deux zones de régénération fonctionnant selon l'invention, 7 tonnes de gaz par heure suffisent.

On comprend d'autant mieux l'intérêt de l'invention quand on sait que certaines unités de reforming catalytique par exemple, nécessitent la régénération de 10 tonnes et même 20 tonnes de catalyseur par jour.

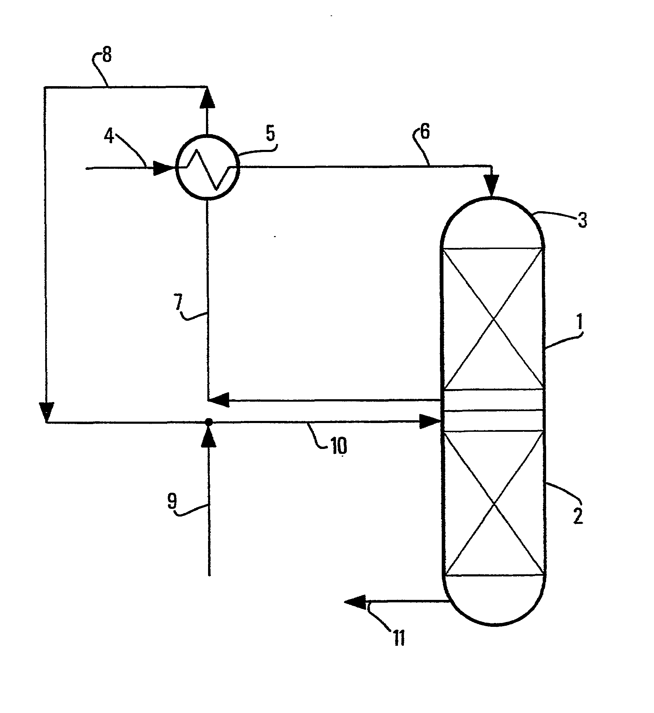

La présente invention est illustrée par la figure unique sur laquelle on utilise deux zones de régénération.

Sur la figure, pour simplifier, on n'a pas représenté les conduites d'introduction et de soutirage du catalyseur dans les deux zones de régénération 1 et 2 disposées toutes les deux dans une même enceinte 3. Le gaz nécessaire à la combustion de coke dans la zone de régénération 1 est introduit par la ligne 6 à une température T. Il a auparavant traversé l'échangeur 5 dans lequel il a été introduit par une ligne 4 à une température T' inférieure à T, et par exemple inférieure de 10 à 60°C (plus particulièrement 20 à 50°C) par rapport à T. Le gaz gagne des calories dans 'échangeur 5. Le gaz appauvri en oxygène est soutiré de la zone 1 par la conduite 7, à une température T1 supérieure à T et par exemple supérieure de 40 à 110°C (plus particulièrement 50 à 90°C) par rapport à T. Le gaz de la conduite 7 traverse l'échangeur 5 où il perd des calories. Ce gaz est ainsi soutiré de l'échangeur 5 par une conduite 8, à une température sensiblement égale à T±Δ, Δ étant compris entre environ 0 et 15°C, de préférence entre 0 et 8°C voire 0 à 4°C. On procède à un appoint en oxygène, introduit par la conduite 9, cette conduite 9 étant disposée sur la figure, après passage dans le dit échangeur 5, mais cet appoint peut être fait avant la traversée dans l'échangeur; on obtient ainsi, dans la ligne 10, un gaz de composition et de température convenables, pour procéder à la combustion du coke du catalyseur disposé dans la deuxième zone de régénération. Des gaz appauvris en oxygène, sont soutirés de la deuxième zone de régénération par la conduite 11.

A titre d'exemple, on donne ci-après les températures pour l'utilisation de deux zones de régénération fonctionnant selon le procédé de l'invention:

|  | Combustion |
| --- | --- |
| Gaz dans la conduite 4 (gaz de combustion avant l'entrée à l'échangeur 5) | 389°C |
| Entrée dans la première zone de régénération (conduite 6) | 420°C |
| Sortie de la première zone de régénération (à l'intérieur de la zone de régénération) | 470°C |
| Sortie de la première ligne de régénération (conduite 7) | 469°C |
| Entrée dans la deuxième zone de régénération (conduite 10) | 419°C |
| Sortie de la deuxième zone de régénération (conduite 11) | 470°C |

EP 0 258 137 B1

L'invention convient particulièrement bien pour la régénération de catalyseurs de reforming à base de platine-étain ou de platine-rhénium et notamment dans les procédés de reforming comportant un agencement dans lequel un premier type d'un ou plusieurs lits fixes de catalyseur opère à faible sévérité (nombre d'octane recherche (NOR) du produit obtenu à la sortie des premiers lits de 85 à 95 et plus particulièrement de 87 à 92) et dans lequel un deuxième type de catalyseur, placé dans un dernier réacteur à lit mobile et à régénération continue du catalyseur conformément à l'invention, fonctionne à haute sévérité, permettant d'obtenir un réformat final ayant un NOR élevé, en général supérieur à 95 et dans la majorité des cas supérieur à 98 et même 100.

L'ensemble des réacteurs peut alors fonctionner à faible pression de manière à tirer avantage des gains de rendement que l'on peut attendre en opérant à basse pression.

Le premier type de catalyseur utilisé dans le ou les premiers lits fixes traversés par la charge renferme :

(a) un support,
(b) généralement de 0,01 à 2% en poids d'au moins un métal noble de la famille du platine par rapport au support, le platine étant toujours présent, de préférence 0,05 à 0.8% et plus particulièrement 0,1 à 0,6% en poids.
(c) Généralement de 0,005 à 3% en poids de rhénium par rapport au support, de préférence 0,05 à 2% et plus particulièrement 0,1 à 0,6% en poids.
(d) Généralement 0,1 à 15% d'au moins un halogène, en poids par rapport au support, de préférence 0,5 à 3% et plus particulièrement 0,9 à 2,5% en poids.

Le deuxième type de catalyseur employé dans au moins le dernier lit catalytique (type lit mobile) traversé par la charge renferme :

(a) un support identique ou différent de celui du premier catalyseur.
(b) Avantageusement de 0,01 à 2% en poids d'au moins un métal noble de la famille du platine par rapport au support, le platine étant toujours présent, de préférence 0,05 à 0,8% et plus particulièrement 0,1 à 0,6% en poids.
(c) Avantageusement de 0,5 à 3% en poids d'étain, de préférence 0,07 à 2%.
(d) Généralement 0,1 à 15% d'au moins un halogène, en poids par rapport au support, de préférence 0,5 à 3% et plus particulièrement 0,9 à 2,5% en poids.

La proportion pondérale du catalyseur renfermant de l'étain est avantageusement de 15 à 70% par rapport à la masse totale catalytique utilisée dans l'ensemble des lits catalytiques (éventuellement 25 à 55%).

A titre d'exemple, on poura utiliser l'un des agencements suivants :
- deux réacteurs en série, le premier réacteur contenant deux lits fixes du premier catalyseur contenant du platine et du rhénium, le deuxième réacteur, à régénération continue de catalyseur contenant un lit mobile du deuxième catalyseur renfermant du platine et de l'étain.
- trois réacteurs en série, les deux premiers à lits fixes, placés côte à côte ou superposés, renfermant chacun un ou plusieurs lits du premier catalyseur contenant du platine et du rhénium, et le troisième réacteur à régénération continue de catalyseur contenant un lit mobile du deuxième catalyseur renfermant du platine et de l'étain. Avantageusement le premier lit fixe pourra être axial, le ou les autres lits fixes étant radiaux.

## Revendications

1. Procédé de régénération d'un catalyseur d'hydroconversion d'hydrocarbures renfermant (a) un support, (b) 0,005 à 5% d'au moins un métal noble choisi dans le groupe formé par le platine, le palladium, l'iridium, le ruthénium et l'osmium et 0,1 à 10% d'un halogène, procédé comprenant une première étape de combustion du coke déposé sur le catalyseur à l'aide d'un gaz renfermant de l'oxygène moléculaire, une deuxième étape d'oxyhalogénation dudit catalyseur simultanément au moyen d'un gaz renfermant de l'oxygène moléculaire et au moyen d'un halogène ou d'un composé halogéné et une troisième étape d'oxydation dudit catalyseur à l'aide d'un gaz renfermant de l'oxygène moléculaire, ledit procédé étant caractérisé en ce qu'il a lieu dans au moins deux zones de régénération dans chacune desquelles ledit catalyseur usé est disposé en lit fixe et en ce que:

(a) préalablement à l'étape de combustion, ledit gaz renfermant de l'oxygène moléculaire pénètre à une température T' dans un échangeur à la sortie duquel ledit gaz est à une température T plus élevée que T',
(b) ledit gaz, à la température T, est introduit dans une première zone de régénération en vue de brûler le coke du catalyseur disposé dans cette première zone de régénération,
(c) un gaz, appauvri en oxygène, est soutiré de la première zone de régénération, à une température T1 supérieure à T, puis est envoyé à travers ledit échangeur défini au paragraphe (a), à la sortie du-

EP 0 258 137 B1

quel ledit gaz appauvri en oxygène est à une température sensiblement égale à T±Δ (où Δ est compris entre 0 et 15°C),

(d) ledit gaz à une température sensiblement égale à T±Δ, après avoir été soumis à un appoint en oxygène, soit avant, soit après la traversée dudit échangeur, est envoyé vers la second zone de régénération en vue de brûler le coke du catalyseur de cette autre zone de régénération.

2. Procédé selon la revendication 1 dans lequel les deux zones de régénération sont superposées.

3. Procédé selon la revendication 1 dans lequel les deux zones de régénération sont côte à côte.

4. Procédé selon l'une des revendications 1 à 3 dans lequel T' est inférieure de 10 à 60°C par rapport à T et dans lequel T1 est supérieure de 40 à 110°C par rapport à T.

5. Procédé de régénération d'un catalyseur selon l'une quelconque des revendications 1 à 4 appliqué à un catalyseur platine-étain utilisé préalablement dans une réaction de reformage.

6. Procédé selon la revendication 5 dans lequel en outre ladite réaction de reformage est conduite en faisant circuler une charge d'hydrocarbures, dans des conditions de réformage en présence d'hydrogène, successivement à travers au moins deux zones de réaction en série, la ou les premières zones de réaction traversée(s) par la charge renfermant chacune un ou plusieurs lits fixes d'un catalyseur qui renferme (a) un support, (b) du platine, (c) du rhénium et (d) un halogène, la ou les dernières zones de réaction traversée(s) par la charge renfermant chacune un ou plusieurs lits mobiles d'un catalyseur qui sera régénéré selon la revendication 5 et qui renferme (a) un support, (b) du platine, (c) au moins de l'étain et (d) un halogène.

**Patentansprüche**

1. Verfahren zum Regenerieren eines Katalysators für die Hydrokonversion von Kohlenwasserstoffen, der umfaßt: (a) einen Träger, (b) 0,005 bis 5% wenigstens eines Edelmetalls, gewählt aus der Gruppe, die gebildet ist durch Platin, Palladium, Iridium, Ruthenium und Osmium sowie 0,1 bis 10% eines Halogens, wobei das Verfahren eine erste Stufe zur Verbrennung des auf dem Katalysator abgeschiedenen Kokses vermittels eines molekularen Sauerstoff enthaltenden Gases und eine zweite Stufe der Oxyhalogenierung dieses Katalysators gleichzeitig vermittels eines Gases, das molekularen Sauerstoff enthält und vermittels eines Halogens oder einer halogenierten Verbindung sowie eine dritte Stufe der Oxidation dieses Katalysators mit Hilfe eines molekularen Sauerstoff enthaltenden Gases umfaßt, wobei das Verfahren sich dadurch auszeichnet, daß es in wenigstens zwei Regenerierungszonen stattfindet, in deren jeder dieser verbrauchte Katalysator im festen Bett angeordnet wird und daß:

(a) jeder Verbrennungsstufe vorhergehend dieses molekularen Sauerstoff enthaltende Gas bei einer Temperatur T' in einen Wärmeaustauscher eintritt, an dessen Ausgang dieses Gas sich auf einer Temperatur T höher als T' befindet,

(b) dieses Gas bei der Temperatur T in eine erste Regenerationszone eingeführt wird, um den Koks des in dieser ersten Regenerationszone angeordneten Katalysators zu verbrennen,

(c) ein an Sauerstoff verarmtes Gas aus der ersten Regenerationszone bei einer Temperatur T1 größer T abgezogen und dann durch diesen in Stufe (a) definierten Wärmeaustauscher geschickt wird, an dessen Ausgang dieses an Sauerstoff verarmte Gas sich auf einer Temperatur im wesentlichen gleich T±Δ befindet (wo Δ sich zwischen 0 und 15°C befindet),

(d) und dieses auf einer Temperatur im wesentlichen gleich T±Δ befindliche Gas, nachdem es einer Sauerstoffzufuhr ausgesetzt wurde, entweder vorher oder nach dem Durchgang durch diesen Wärmeaustauscher zur zweiten Regenerationszone geschickt wird, um den Koks des Katalysators dieser anderen Regenerationszone zu verbrennen.

2. Verfahren nach Anspruch 1, dadurch gekennzeichnet, daß die beiden Regenerationszonen einander überlagert sind.

3. Verfahren nach Anspruch 1, dadurch gekennzeichnet, daß die beiden Regenerationszonen seitlich nebeneinander angeordnet sind.

4. Verfahren nach einem der Ansprüche 1 bis 3, dadurch gekennzeichnet, daß T' um 10 bis 60°C kleiner mit bezug auf T ist und daß T1 um 40 bis 110°C größer, bezogen auf T, ist.

5. Verfahren zum Regenerieren eines Katalysators nach einem der Ansprüche 1 bis 4, in Anwendung auf einen Platin-Zinn-Katalysator, der vorher in einer Reformierungsreaktion verwendet wurde.

6. Verfahren nach Anspruch 5, dadurch gekennzeichnet, daß im übrigen diese Reformierungsreaktion durchgeführt wird, indem man eine Kohlenwasserstoffcharge unter Reformierungsbedingungen in Anwesenheit von Wasserstoff nacheinander durch wenigstens zwei in Reihe geschaltete Reaktionszonen strömen läßt, wobei die erste(n) Reaktionszone(n), welche von der Charge durchströmt wird (werden) je ein oder mehrere feste Betten eines Katalysators umfassen, der (a) einen Träger, (b) Platin, (c) Rhenium und (d) ein Halogen umfaßt, wobei die letzte Reaktionszone(n), die von der Charge durchströmt wird bzw. werden je ein oder mehrere bewegliche Betten für einen Katalysator aufweisen, der entsprechend Anspruch 5 regeneriert wird und der (a) einen Träger, (b) Platin, (c) wenigstens Zinn und (d) ein Halogen umfaßt.

## Claims

1. A process for regenerating a hydrocarbon hydroconversion catalyst containing (a) a carrier, (b) 0,005–5% of at least one noble metal selected from the group consisting of platinum, palladium, iridium, ruthenium and osmium and 0.1 to 10% of a halogen, the process comprising a first step of combustion of the coke deposited onto the catalyst, by means of a molecular oxygen, a second step of oxyhalogenation of said catalyst simultaneously by means of a gas containing molecular oxygen, and by means of a halogen or halogenated compound and a third step of oxidation of said catalyst by means of a gas containing molecular oxygen, the said process being characterized in that it occurs in at least two regeneration zones, wherein in each one, the catalyst is arranged as a fixed bed and in that

(a) prior to the combustion step, said molecular oxygen-containing gas is fed at a temperature T′, to an exchanger at the output of which said gas is at a temperature T higher than T′,

(b) said gas, at temperature T, is fed into a first regeneration zone, so as to burn the coke of the catalyst present in said first regeneration zone,

(c) a gas of reduced oxygen content is withdrawn from said first regeneration zone, at a temperature T1 higher than T, is then supplied to said exchanger as defined in paragraph (a), at the output of which said gas of decreased oxygen content is at a temperature substantially equal to T±Δ (Δ ranging from 0 to 15°C),

(d) said gas at a temperature substantially equal to T±Δ , after addition of make-up oxygen either before or after passage, is fed through said exchanger, to a second regeneration zone, so as to burn the coke of the catalyst in said other regeneration zone.

2. A process according to claim 1, wherein the two regeneration zones are superposed.

3. A process according to claim 1, wherein the two regeneration zones are placed side-by-side.

4. A process according to one of the claims 1 to 3, wherein T′ is 10 to 60°C lower than T and T1 is 40 to 110°C higher than T.

5. A process for regenerating a catalyst according to one of claims 1 to 4, applied to a platinum-tin catalyst previously used in reforming reaction.

6. A process according to claim 5, further comprising conducting said reforming reaction by circulating a hydrocarbon charge under reforming conditions in the presence of hydrogen, successively through at least two reaction zones in series, each of the one or more first reaction zones wherethrough passes the charge containing one or more fixed beds of a catalyst comprising (a) a carrier, (b) platinum, (c) rhenium and (d) a halogen, each of the one or more last reaction zones wherethrough passes the charge containing one or more moving beds of a catalyst which will be regenerated according to claim 5 and which comprises (a) a carrier, (b) platinum, (c) at least tin and (d) a halogen.